Europäisches Patentamt

European Patent Office

Office européen des brevets

(19)

(11) Publication number: **0 100 796**
**B1**

(12) **EUROPEAN PATENT SPECIFICATION**

(45) Date of publication of patent specification: **30.07.86**

(21) Application number: **82304171.0**

(22) Date of filing: **06.08.82**

(51) Int. Cl.⁴: **B 65 D 65/40,** B 65 D 65/28,
B 65 D 30/10

(54) **Plastics material film sheet having a preselected weakened area, process for its manufacture and package made therefrom.**

(43) Date of publication of application:
**22.02.84 Bulletin 84/08**

(45) Publication of the grant of the patent:
**30.07.86 Bulletin 86/31**

(84) Designated Contracting States:
**AT BE CH DE FR IT LI LU NL SE**

(56) References cited:
DE-A-2 527 166
US-A-3 074 544
US-A-3 217 871
US-A-3 386 645
US-A-3 608 709

PATENT ABSTRACTS OF JAPAN, unexamined
applications, M section, vol. 4, no. 6, January
18, 1980 THE PATENT OFFICE JAPANESE
GOVERNMENT page 105 M 88

(73) Proprietor: **Malter-Daries, Jay**
**1a Maida Avenue**
**London W2 1TF (GB)**

(72) Inventor: **Pike, Brian R.**
**1611 South Pacific Coast Highway**
**Redondo Beach California 90277 (US)**

(74) Representative: **Jenkins, Richard Gray et al**
**R.G.C. Jenkins & Co. 12-15, Fetter Lane**
**London EC4A 1PL (GB)**

Courier Press, Leamington Spa, England.

# Description

This invention relates in general to new and useful improvements in the manufacture of packages, and more particularly to a plastics material film sheet particularly adapted to form a package for foods, chemicals, medical supplies or the like and having a rupturable seal. The invention is particularly applicable to packages having a rupturable seal between two or more compartments through which one of at least two substances passes to permit mixing within the package. Packages of this general type are disclosed in the inventors U.S. Patent 3,608,709.

It is known from U.S. Patent No. 3,608,709 to bond two preformed films together adhesively with the bond between the films in certain areas being weaker than in other areas so as to define a preselected weakened area which becomes part of the seal. However, such films are difficult to form and the strength of the bond surrounding the weakened area has not been sufficiently predictable. It is also desirable that one of the two films should be substantially thinner than the other and it has not been possible hitherto to provide a preformed film which can be handled and yet which is sufficiently thin to provide a predictable weakened area which will rupture under the required pressure.

It is therefore an object of the present invention to provide what is truly a single homogeneous sheet of thermoplastic material that has a localised area of resist, which divides the sheet at intermediate portions into two discrete thicknesses of the same material and which two discrete thicknesses cannot be fused together at a later date due to the presence of the resist material. In other words, the resultant homogeneous sheet of thermoplastic material that has been formed from two thicknesses of the same material has an integral self bond therein so that for all practical purposes, except in the area of the resist material, it is a single homogeneous thickness material.

Accordingly, the present invention provides in one aspect a thermoplastics material film sheet particularly adapted to form a package having a rupturable seal, said sheet having an intended seal forming area and an internal resist material within said sheet generally in alignment with said seal forming area, said resist material reducing the effective thickness of said sheet in said seal forming area and defining a preselected weakened area having two surface portions and wherein rupture of one surface portion only may be effected, said sheet otherwise being rupturable only throughout its entire thickness, said film sheet being formed solely of an outer film and an inner film characterised in that the outer film initially comprises a preformed film and the inner film comprises a thinner layer of material cast as a hot melt onto the preformed outer film and in that the inner and outer films are a single homogeneous layer except in said intended seal forming area.

According to a further aspect of the present invention there is provided a process for forming a thermoplastic material film sheet comprising the steps of:
— applying a resist material to the surface of a first preformed film of thermoplastic sheet material at selected areas thereof, and
— casting a second film of a thermoplastic resin, thinner than the first film and in the form of a hot melt, onto the surface of the first film at least in the region of the resist material covering and surrounding said resist material whereby the two films form a single homogeneous sheet.

This invention is particularly important insofar as it relates to packages for food wherein two different foods may be packaged in a single package in adjacent compartments separated by a rupturable seal such that when the seal is ruptured, food being transferred from one compartment to the adjacent compartment will actually pass over the resist material. It is therefore a preferred feature of the invention to form the resist material itself of a food grade material. The resist material itself may be a food or be recognised as being quite compatible as a food additive.

The resist material may be suitably applied to the first film by means of printing and the like.

The step of casting the second thinner film has the advantages over the use of a preformed second thinner film that in the normal formation of plastics material films a tube is extruded and is then blown and stretched to a much larger diameter. Certain of this stretching takes place at the orientation temperature and therefore the plastic material becomes oriented and is much stronger than a similar thickness of cast film of the same material. If the second thinner film is preformed, it must have sufficient strength to be drawn from a roll over rollers in tension with the result that a relatively high stress is put on a preformed film and it must have a much higher strength than that required in the package. For these reasons a cast inner film has significant benefits and advantages over a preformed film.

The thermoplastics material film sheet formed in accordance with this invention may be folded and cut to length to form pouches which have either at the ends thereof or in intermediate areas thereof a seal which is aligned with and contained within the perimeter of a weakened area and wherein when opening force is applied, the film having the weakened areas therein will rupture along that weakened area so as to effect an opening of the pouch. Thus, the sheet material of the invention can be used to make single-compartment sachets for shampoos, condiments and the like, as well as multi-compartment sachets of the type already described.

It is to be understood that the plastics material film sheet may also be bonded to other sheets which may be formed of other materials or plastics materials either by heat bonding or by means of a suitable adhesive.

Further, it is to be understood that the plastics material film sheet is particularly adaptable for use in forming pouches for receiving medical disposables and may employ the conventional chevron seal configuration.

In addition, the film sheet may be utilized in the sealing of jars and the like wherein the weakened area is annular and the film sheet is secured to the container lip in alignment with the weakened area so that the lid formed by the film sheet may be torn off all except for the thin narrow part which forms part of the seal with the container.

Another use of the film sheet is as a removable seal for cartons and the like and as such may also function as a label.

It is particularly pointed out here that the resist material incorporated in the film sheet must have the purpose of preventing bonding together of the inner and outer films in the weakened area during the formation of a heat seal.

With the above, and other objects in view that will hereinafter appear, the nature of the invention will be more clearly understood by reference to the following detailed description, the appended claims, and the several views illustrated in the accompanying drawings.

IN THE DRAWINGS:

Figure 1 is a schematic view showing the manner in which the film sheet of this invention may be formed with the thinner film being cast in place as an extrudate.

Figure 2 is an enlarged fragmentary sectional view taken along the line 2—2 of Figure 1 and shows the cross section of the film sheet.

Figure 3 is a schematic view showing the manner in which the film sheet may be transversely folded to form a tube which may be severed at intervals to form pouches.

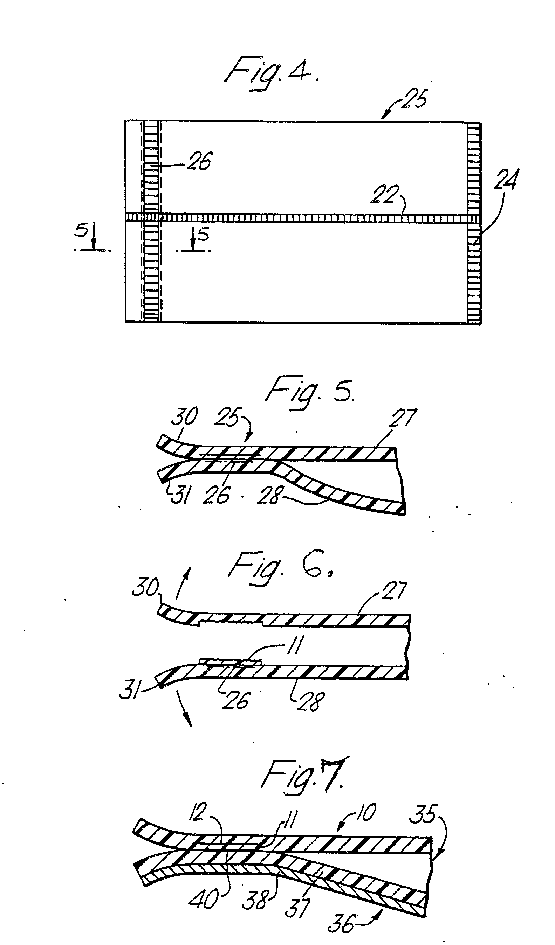

Figure 4 is a plan view of a pouch which is formed with the tube material of Figure 3.

Figure 5 is an enlarged fragmentary sectional view taken along the line 5—5 of Figure 4 and shows the seal area of the pouch.

Figure 6 is an enlarged fragmentary sectional view similar to Figure 5 and shows the ruptured seal.

Figure 7 is a fragmentary sectional view similar to Figure 5 and shows the film sheet secured to another sheet of different material in the formation of a pouch.

Figure 8 is a schematic fragmentary plan view of the film sheet utilizing in forming a pouch for medical disposables wherein the seal is a chevron seal.

Figure 9 is a schematic plan view with parts broken away in section showing the film sheet utilized as a removable lid for a container such as a jar.

Figure 10 is a fragmentary sectional view showing a carton or the like wherein end of flaps are held together by a seal formed of the film sheet and wherein the seal may be in the form of a label.

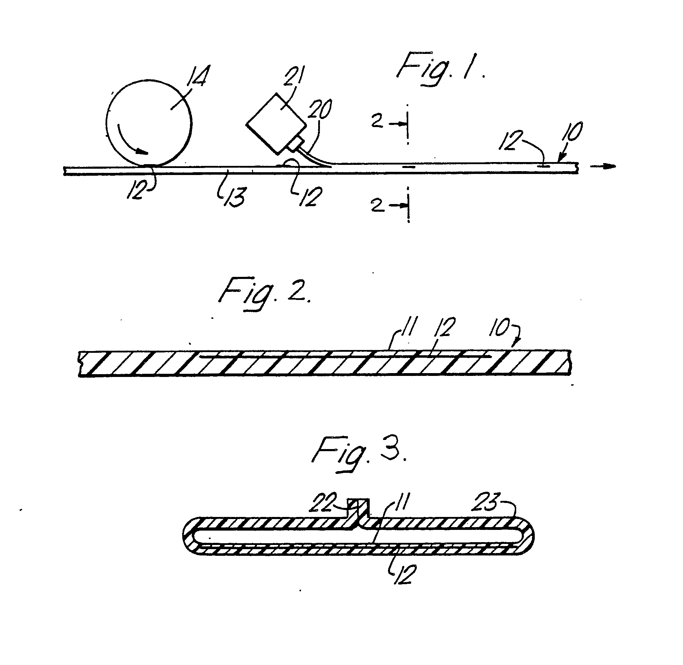

Referring now to the drawings in detail, reference is first made to Figure 2 wherein there is illustrated a plastics material film sheet having a preselected weakened area therein formed in accordance with this invention. The plastics material sheet is generally identified by the numeral 10 and has a weakened area 11 defined by an internal resist layer 12. The material of the resist layer 12 may be a food or be recognized as being compatible as a food additive as will be discussed hereinafter.

Referring now to Figure 1, it will be seen that the film sheet 10 may be formed in the following manner: The separate film sheet 13 is provided and the resist material 12 is applied utilizing a conventional printing mechanism 14. Then a second film sheet 20 is extruded from a film extruder 21 as a cast extrudate at a sufficient temperature wherein the film sheet 20 becomes integrally bonded to the film sheet 13. As previously described, the second film sheet 20, when it is in the form of a cast extrudate, will be much weaker than the film 13 and, therefore, rupture of a seal may be controlled to be at a much lower force.

It is to be understood that the plastics material from which the film sheets 13 and 20 are formed must be conventional thermoplastics which are self bonding. More particularly, they must be self bonding at the ·elevated temperature at which thermoplastics material is cast so that with particular reference to the embodiment of Figure 1, the cast film 20 will self bond to the film 13 to result in, for all practical purposes, a single layer sheet as is shown in Figure 2. The preferred thermoplastics include polyethylene, ionomer resins, and polyvinylchloride. Polyethylene is particularly advantageous in view of its casting temperature of 320—338°C while the ionomer resins have a casting temperature of 304—316°C. Blended resins may also be used. In general, resins having a relatively low melt index are preferable as they result in a more easily ruptured film.

It is to be understood that due to the high temperature of the cast film and the fact that the cast film, is at such a high temperature as to permit self heat bonding, the surfaces of the two films in the area of the resist material 12, as well as the resist material, are heated to a sterilization temperature and thus are sterile. Accordingly, when the film 20 is ruptured in the opening of a package in the manner described hereinafter, the exposed external surfaces will be sterile.

It has been found that exceptional results have been obtained with a food additive, hydroxypropyl methyl cellulose USP 3 CPS. This material is sold by the Biddle Sawyer Corporation of New York under the trade name of "Pharmacot 603". The chief characteristics of "Pharmacot 603" are its recognition as a food additive by the U.S. Food and Drug Administration and the fact that it complies with all USP specifications. Further, it can be given a Certificate of Certification for Kosher food applications.

"Pharmacot 603" has the capability of being put into suspension with just water, or with alcohol.

As such, it can form a thick viscous liquid which can be diluted on the printing machinery with the further addition of water, allowing the pressman to adjust the viscosity as need for the particular application. Since "Pharmacot 603" can be put into suspension both in water and in alcohol, and in other food-based products, and as itself is recognized as a food additive, it forms a resist which is entirely edible and could not possibly contaminate food products.

Other materials that are suitable for use as a resist and which would be acceptable for use with food products are: methyl cellulose hydroxypropyl methyl cellulose phthalate, hydroxypropyl cellulose, ethyl cellulose, microcrystaline cellulose, sugar, pharmaceutical grade shellac, pharmaceutical grade waxes, carboxymethyl cellulose, zein, cross-linked polyvinyl pyrrolidone, polyvinyl acetyl phthalate, cellulose acetate phthalate, acrylic polymers and products relating to the foregoing.

It is also pointed out here that in the formation of a typical pouch, the sheet film 10 would have a thickness on the order of 125 μ with the thicker film 13 having a thickness on the order of 100 μ and the thinner film having a thickness on the order of 25 μ. The preferred thickness range for the thinner film is 5—50 μ (7 to 10 μ for some purposes), and the ratio of the thicknesses of the two films is usually in the range from 2:1 to 5:1, typically 4:1.

In the formation of a typical pouch utilizing the film sheet 10, the film sheet 10 is of a predetermined width to form a pouch, or multiples thereof. The resist material 12 extends over the intended width of the pouch.

The film sheet 10 is reversely folded upon itself in the manner shown in Figure 3 and the remote edges thereof are heat sealed together as at 22. The sealed areas may be folded flat. The net result is a tube 23.

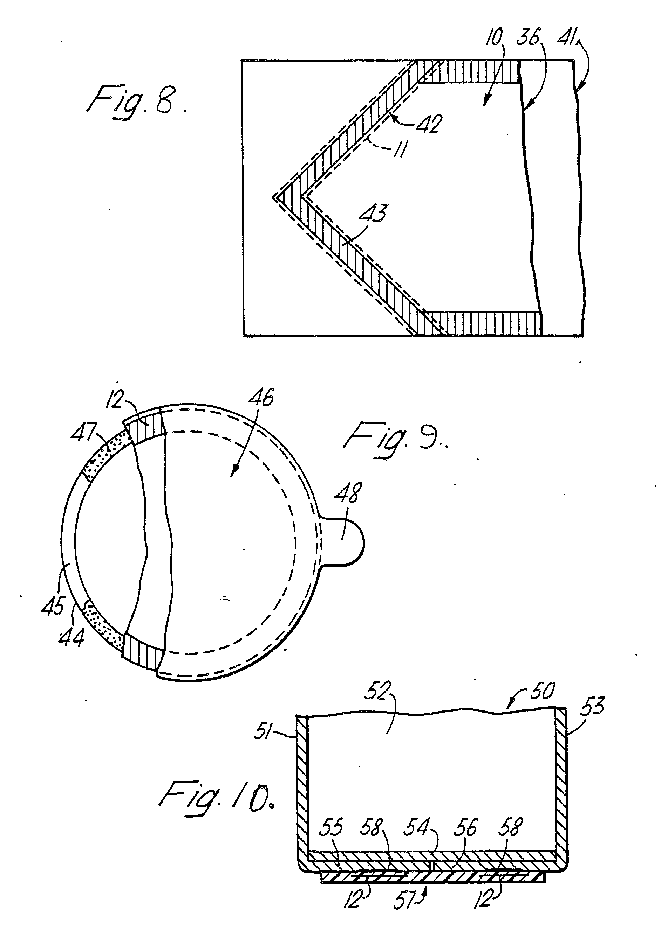

The tube 23 may then be provided with transverse seals 24, at intervals, and then cut, as shown in Figure 5. After the resultant pouch, generally identified by the numeral 25, has been formed, a suitable product may be placed therein after which the opposite end of the pouch 25 is closed by a further seal which is aligned with and totally within the weakened area 11 defined by the resist material 12.

In Figure 5, there is illustrated a typical cross section through the pouch. It will be seen that the heat seal 26 is between the two walls 27, 28 of the pouch and that the walls 27, 28 have free end portions 30, 31 which facilitate the opening of the pouch. As is shown in Figure 6, when the free end portions 30, 31 are pulled apart, the wall 27 will rupture in the area defined by the weakened portion 11 with that part of the weakened portion 11 defined by the thinner of the original film sheets becoming detached and remaining fused to the wall 28.

It is to be understood that the illustrated pouch 25 is only one of the numerous usages to which a film sheet, such as the film sheet 10, may be placed.

Referring now to Figure 7, it will be seen that the film sheet 10 is illustrated in the formation of a pouch 35 by bonding it to another sheet material, generally identified by the numeral 36. It is to be understood that the sheet material 36 could be in the form of paper, paper film laminates, film metal foil laminates, etc. In the illustrated embodiment, the other sheet 36 is shown as a laminate including an inner layer 37 and an outer layer 38 with the inner layer being sealed to the weakened area 11 of the film sheet 10 by a seal 40 which may either be an adhesive seal or a heat bonded seal.

In Figure 8, there is schematically illustrated a conventional type of pouch, generally identified by the numeral 41 which may be utilized for storing and shipping medical disposables. The pouch 41 is provided with a chevron seal, generally identified by the numeral 42. In accordance with this invention, at least one layer of the pouch 41 is in the form of the film sheet 10 while the other layer may be in the form of a sheet, such as the aforedescribed sheet 36. The weakened area 11 of the film sheet 10 is illustrated as being of a chevron configuration and has centered therein a suitable bond 43.

Referring now to Figure 9, it will be seen that the film sheet 10 may be utilized as a lid or other type of cover for containers. A conventional jar 44 having a sealing lip 45 is illustrated. The lid, which is identified by the numeral 46, is suitably bonded to the lip 45 by way of a seal 47, which may be an adhesive bond or a fusion bond and which is aligned with the resist 12 which is illustrated of a circular configuration. The lid 46 is provided with a suitable tab 48 to facilitate the progressive tearing of the lid material in alignment with the bond 47 in the same manner as is shown in Figure 6.

In Figure 10, there is illustrated a conventional type of carton, generally identified by the numeral 50. The carton 50 has walls 51, 52 and 53 with the wall 52 having an inner closure flap 54 and the walls 51 and 53 having outer closure flaps 55 and 56, respectively. A closure element, generally identified by the numeral 57, is suitably bonded to the flaps 55 and 56 as at 58 in alignment with the resist material 12 so that the closure element 57 may be readily removed.

It is also pointed out here that the closure element 57 may also be in the form of a suitable label or may merely function as a store seal, particularly if the carton 50 contains other containers or packages.

At this time it is particularly pointed out that the sheet film 10 is adapted to be secured to other materials either by way of an adhesive bond or by way of a heat bond or fusion bond. It is to be understood that the net result of the bonding of the two layers of the sheet film 10 is an integral single thickness material as opposed to a laminated material. It is further to be understood that the resist material 12 is of a nature and of a thickness so as to prevent self-adhesion of the film sheet 10 in the weakened area 11 during the formation of a fusion bond.

It is also pointed out that the same film 10, and the resultant seals may be used in a multiple compartment package of the type disclosed in my prior U.S. Patent No. 3,608,709.

It will be readily apparent that inasmuch as the resist in each instance is a product which is compatible with food and is either a food or a food additive and the resist and exposible film surfaces are sterile, when food is packed in a package formed in accordance with this invention and the package is either opened to communicate two compartments or to dispense a product by the rupture of the film to expose the resist, the food may freely flow over the resist material without danger of contamination.

The sheet material of the invention can be used in packaging in a wide variety of fields. Because of the inherent sterility imparted by the casing or melt bonding process, packages made with the sheet material of the invention are particularly suitable for use in the medical and pharmaceutical fields. They can for example be used in ice packs and in the packaging of surgical instruments, hypodermic needles, drugs, barium meals and the like. In field of cosmetics, the packages are particularly suitable for products wherein two components have to be mixed for use, for example depilatories, hair colourants and the like. As pointed out above, the packaging can be used for food grade materials such as cake mixes and prepacked drinks and in the industrial field they can be used for example in the packaging of adhesives, particularly those such as epoxy resins wherein two components are mixed together at the point of use.

### Claims

1. A thermoplastics material film sheet particularly adapted to form a package having a rupturable seal, said sheet having an intended seal forming area and an internal resist material (12) within said sheet generally in alignment with said seal forming area, said resist material (12) reducing the effective thickness of said sheet in said seal forming area and defining a preselected weakened area having two surface portions and wherein rupture of one surface portion only may be effected, said sheet otherwise being rupturable only throughout its entire thickness, said film sheet (10) being formed solely of an outer film (13) and an inner film (20) characterised in that the outer film (13) initially comprises a preformed film and the inner film (20) comprises a thinner layer of material cast as a hot melt onto the preformed outer film (13) and in that the inner and outer films are a single homogeneous layer except in said intended seal forming area.

2. The sheet of claim 1, characterised in that the thickness of the inner film (20) is within the range 5 μ to 50 μ.

3. The sheet of Claim 1 characterised in that the thickness of the outer film (13) is of the order of 100 μ and the thickness of the inner film (20) is of the order of 25 μ.

4. The sheet of any preceding claim, characterised in that said resist material (12) and the surfaces of said film (10) on opposite sides of said resist material (12) are heat sterile.

5. The sheet of any preceding claim characterised in that said preselected weakened area (11) extends completely around said intended seal forming area to form a complete path of weakness around said seal forming area.

6. The sheet of any preceding claim, characterised in that said resist material (12) is in the form of a food or a food additive.

7. The sheet of claim 6 characterised in that said resist material (12) is hydroxypropyl methyl cellulose USP 3 CPS.

8. The sheet of any preceding claim characterised in that said sheet (10) is folded upon itself with a portion of the sheet remote from said seal forming area bonded to said seal forming area and forming a rupturable seal (26) therewith.

9. The sheet of claim 8, characterised in that other edges of said sheet are bonded together to form a sealed pouch.

10. A filled package formed from a thermoplastics material film sheet as claimed in any preceding claim, in which the package includes at least one compartment bounded by a rupturable seal, characterised in that said internal resist material (12) in the film sheet (10) is located substantially across said rupturable seal (26) so as to reduce the effective thickness of said sheet (10) in the area of the rupturable seal (26).

11. A process for forming a sheet (10) according to claim 1 which comprises the steps of:
— applying a resist material (12) to the surface of a first preformed film (13) of thermoplastic sheet material at selected areas thereof, and
— casting a second film (20) of a thermoplastic resin, thinner than the first film (13) and in the form of a hot melt, onto the surface of the first film at least in the region of the resist material (12), covering and surrounding said resist material, whereby the two films form a single homogenous sheet.

### Patentansprüche

1. Folienförmiger Bogen aus thermoplastischem Material, insbesondere zur Bildung einer Verpackung mit einem aufreißbaren Verschluß, wobei der Bogen ein den vorgesehenen Verschluß bildendes Gebiet und ein inneres Deckmaterial (12) in diesem Bogen aufweist, welches im wesentlichen auf das Verschlußbildungsgebiet ausgerichtet ist, wobei das Deckmaterial (12) die effektive Dicke der Folie in dem Verschlußbildungsgebiet reduziert und ein vorgegebenes Schwächungsgebiet mit zwei Oberflächenteilen abgrenzt, und wobei nur ein Aufreißen eines Oberflächenteils ausgeführt werden kann und andernfalls die Folie nur über ihre gesamte Dicke aufreißbar ist, wobei der folienartige Bogen (10) allein aus einem äußeren Film (13) und einem inneren Film (20) gebildet ist, dadurch gekennzeichnet, daß der äußere Film (13) anfangs einen vorgeformten Film und der innere Film (20) eine dünnere Schicht aus einem Material enthält, das als heiße Schmelze auf den vorgeformten äußeren Film (13) aufgegossen ist, und daß der innere und der äußere Film mit Ausnahme des den vorgesehenen Verschluß bildenden Gebietes eine einzelne homogene Schicht bilden.

2. Bogen nach Anspruch 1, dadurch gekennzeichnet, daß die Dicke des inneren Filmes (20) im Bereich von 5 μ bis 50 μ liegt.

3. Bogen nach Anspruch 1, dadurch gekennzeichnet, daß die Dicke des äußeren Filmes (13) in der Größenordnung von 100 μ und die Dicke des inneren Filmes (20) in der Größenordnung von 25 μ liegt.

4. Bogen nach einem der vorangehenden Ansprüche, dadurch gekennzeichnet, daß das Deckmaterial (12) und die Oberflächen des Filmes (10) auf einander gegenüberliegenden Seiten des Deckmaterials (12) durch Hitze sterilisiert sind.

5. Bogen nach einem der vorangehenden Ansprüche, dadurch gekennzeichnet, daß sich das vorgegebene Schwächungsgebiet (11) vollständig um das den vorgesehenen Verschluß bildende Gebiet erstreckt, um einen vollständigen Schwächungsweg um das Verschlußbildungsgebiet zu bilden.

6. Bogen nach einem der vorangehenden Ansprüche, dadurch gekennzeichnet, daß das Deckmaterial (12) in der Form eines Nahrungsmittels oder eines Nahrungsmittelzusatzes vorliegt.

7. Bogen nach Anspruch 6, dadurch gekennzeichnet, daß das Deckmaterial (12) Hydroxypropylmethylcellulose USP 3 CPS ist.

8. Bogen nach einem der vorangehenden Ansprüche, dadurch gekennzeichnet, daß der Bogen (10) auf sich selbst gefaltet ist, wobei ein Abschnitt des Bogens, der von dem Verschlußbildungsgebiet entfernt liegt, an dieses Verschlußbildungsgebiet angeheftet ist und damit einen aufreißbaren Verschluß (26) bildet.

9. Bogen nach Anspruch 8, dadurch gekennzeichnet, daß die anderen Ränder des Bogens zur Bildung eines verschlossenen Beutels aneinander angeheftet sind.

10. Gefüllte Packung, die aus einem folienartigen Bogen aus thermoplastischem Material nach einem der vorangehenden Ansprüche gebildet ist, wobei die Packung wenigstens eine Abteilung aufweist, die durch einen aufreißbaren Verschluß abgegrenzt ist, dadurch gekennzeichnet, daß das innere Deckmaterial (12) in dem folienartigen Bogen (10) im wesentlichen quer zu dem aufreißbaren Verschluß (26) angeordnet ist, so daß die effektive Dicke des Bogens (10) in dem Gebiet des aufreißbaren Verschlusses (26) vermindert ist.

11. Verfahren zur Herstellung eines Bogens nach Anspruch 1 mit folgenden Verfahrensschritten:

Aufbringen eines Deckmaterials (12) auf ausgewählte Gebiete der Oberfläche eines ersten vorgeformten Filmes (13) aus thermoplastischem Bogenmaterial; und

Aufgießen eines zweiten Filmes (20) aus thermoplastischem Kunstharz, der dünner ist als der erste Film (13) und in Form einer heißen Schmelze vorliegt, auf die Oberfläche des ersten Filmes wenigstens in dem Gebiet des Deckmaterials (12), Bedecken und Einhüllen des Resistmaterials, wodurch die beiden Filme einen einzelnen homogenen Bogen bilden.

**Revendications**

1. Feuille en matière thermoplastique particulièrement adaptée pour former un emballage pourvu d'une fermeture hermétique apte à se rompre, ladite feuille possédant une zone prédéterminée formant la fermeture hermétique et un matériau de protection interne (12) placé à l'intérieur de ladite feuille, sensiblement en alignement avec ladite zone formant la fermeture hermétique, ledit matériau de protection (12) réduisant l'épaisseur effective de ladite feuille dans ladite zone formant la fermeture hermétique et définissant une zone présélectionnée de moindre résistance présentant deux parties de surface et dans laquelle seule une partie de surface peut être rompue, ladite feuille ne pouvant autrement être rompue que sur la totalité de son épaisseur, ladite feuille (10) étant formée uniquement d'un film externe (13) et d'un film interne (20), caractérisée en ce que le film externe (13) comprend initialement un film préformé et le film interne (20) comprend une couche plus fine d'un matériau coulé à l'état fondu sur le film externe préformé (13) et en ce que les films interne et externe constituent une seule couche homogène, excepté dans la zone prédéterminée formant la fermeture hermétique.

2. Feuille selon la revendication 1, caractérisée en ce que l'épaisseur du film interne (20) se situe dans la plage de 5 à 50 microns.

3. Feuille selon la revendication 1, caractérisée en ce que l'épaisseur du film externe (13) est de l'ordre de 100 microns et l'épaisseur du film interne (20) est de l'ordre de 25 microns.

4. Feuille selon l'une quelconque des revendications précédentes, caractérisée en ce que ledit matériau de protection (12) et les surfaces de ladite feuille (10) situées sur des faces opposées dudit matériau de protection (12) sont stérilisés thermiquement.

5. Feuille selon l'une quelconque des revendications précédentes, caractérisée en ce que ladite zone présélectionnée de moindre résistance (11) entoure complètement ladite zone formant la fermeture hermétique pour former une ligne fermée d'affaiblissement autour de ladite zone formant la fermeture hermétique.

6. Feuille selon l'une quelconque des revendications précédentes, caractérisée en ce que ledit matériau de protection (12) se présente sous la forme d'un aliment ou d'un additif alimentaire.

7. Feuille selon la revendication 6, caractérisée en ce que ledit matériau de protection (12) est de l'hydroxypropyl méthyl cellulose USP 3 CPS.

8. Feuille selon l'une quelconque des revendications précédentes, caractérisée en ce que ladite feuille (10) est repliée sur elle-même, une partie de la feuille distante de ladite zone formant la fermeture hermétique étant liée à ladite zone formant la fermeture hermétique et constituant avec celle-ci une fermeture hermétique apte à se rompre (26).

9. Feuille selon la revendication 8, caractérisée en ce que d'autres bords de ladite feuille sont liés les uns aux autres pour former un sachet hermétique.

10. Emballage plein formé à partir d'une feuille en matière thermoplastique selon l'une quelconque des revendications précédentes, dans lequel l'emballage comporte au moins un compartiment limité par une fermeture hermétique, caractérisé en ce que ledit matériau de protection interne (12) placé dans la feuille (10), est situé sensiblement transversalement à ladite fermeture hermétique apte à se rompre (26) de manière à réduire l'épaisseur effective de ladite feuille (10) dans la zone de la fermeture hermétique apte à se rompre (26).

11. Procédé pour former une feuille (10) selon la revendication 1, comprenant les étapes consistant à:

— appliquer un matériau de protection (12) sur la surface d'un premier film préformé (13), fait d'une feuille en matière thermoplastique, au niveau de zones présélectionnées de celui-ci, et à

— couler un second film (20) en résine thermoplastique, en une couche plus fine que le premier film (13) et à l'état fondu, sur la surface du premier film, au moins dans la zone du matériau de protection (12), en recouvrant et en enfermant ledit matériau de protection, pour que les deux films forment ainsi une seule feuille homogène.

Fig. 1.

Fig. 2.

Fig. 3.

*Fig. 4.*

25

26

22

24

5

5

*Fig. 5.*

30   25                          27

31   26    28

*Fig. 6.*

30                              27

11

31           26        28

*Fig. 7.*

12        11        10        35

40    38    37    36

Fig.8.

10  36  41

42

11

43

12  46

Fig.9.

47

48

45

44

52  50  53

51

Fig.10.

55  58  54  56  58

12  57  12